# EUROPEAN PATENT APPLICATION

(11) **EP 2 108 835 A2**
(43) Date of publication of application: **14.10.2009**
(21) Application number: 09152133.6
(22) Date of filing: 05.02.2009
(51) Int. Cl.: F03D 11/00, F03D 11/04

(54) **Cable guard and method of installation**

(30) Priority: 15.02.2008 US 32062
(71) Applicant: General Electric Company, Schenectady, NY 12345 (US)
(72) Inventor: Martin, Negel, Tehachapi, CA 93561 (US); Ackerman, Paul, Woodstock, MN 56186 (US)
(74) Representative: Bedford, Grant Richard

(57) **Abstract**

A wind turbine generator (100) is provided. The wind turbine generator (100) includes a tower (102) extending from a support surface (104), the tower including a top (116), a bottom (118), and a passageway (120) extending from the bottom to the top, a nacelle (106) rotatably coupled to the tower top for rotational movement with respect to the tower, a rotor (108) coupled to the nacelle, the rotor including a plurality of rotor blades (112) coupled thereto, at least one cable (142) extending through the passageway and including one end coupled with the nacelle, and a cable guard (150) coupled within the passageway for shielding the at least one cable from abrasion, the cable guard including at least one elastomeric pad (152,162).

## Description

The field of the invention relates generally to cable guards for use in shielding cables, and more particularly to cable guards for use in protecting cables from damage in a wind turbine generator.

Wind turbine generators use wind energy to generate electricity. Typically, wind turbine generators include a tower, a nacelle mounted on the tower, and a rotor with blades connected to the nacelle. Wind causes the blades and rotor to rotate with respect to the nacelle thereby creating mechanical energy that is transferred by a generator into useable electrical energy. Since the wind direction frequently changes, the nacelle is commonly rotatably mounted on the tower so that the blades can be properly aligned with respect to the wind to maximize the amount of wind energy acting on the blades.

Often, the generator and associated equipment are installed in the nacelle on a platform (e.g., a yaw deck) that is adjacent the top of the tower. At least some known towers include a passageway defined therein that extends from the ground to the platform in the nacelle. A ladder is commonly provided in the passageway to provide access to the generator and associated equipment for maintenance and repair. The passageway also provides an area for cables to be routed. For example, such cables may be used to transfer electricity from the generator to the power grid, and/or to supply power and controls to the generator and associated equipment installed in the nacelle. An opening formed in the platform enables the cables to pass from the tower passageway into the nacelle.

Since the nacelle rotates with respect to the tower, the generator and associated equipment rotate as well. As a result, the cables connected to the generator and associated equipment also rotate along a least a portion of their length within the nacelle tower. Rotation of at least some nacelles may cause the cables rotated with the nacelles to rub against, or otherwise contact, the edge that defines the opening in the platform and/or the ladder in the tower. Over time, continued rubbing may cause abrasions, cuts, or other damage to the cables. Significant cable damage can may lead to damage to the wind turbine generator (e.g., shorting of equipment, fire), injury to maintenance personal (e.g., electric shock), and/or considerable down time for cable repair or replacement.

In one aspect according to the present invention, a wind turbine generator generally comprises a tower extending from a support surface. The tower comprises a top, a bottom, and a passageway extending from the bottom to the top. A nacelle is rotatably coupled to the tower top for rotational movement with respect to the tower, and a rotor is coupled to the nacelle. The rotor comprises a plurality of rotor blades coupled thereto. At least one cable extends through the passageway and comprises one end coupled with the nacelle. A cable guard is coupled within the passageway for shielding the at least one cable from abrasion. The cable guard comprises at least one elastomeric pad.

In another aspect, a cable guard is for installation in a wind turbine generator including a tower with a passageway therein and a ladder disposed in the passageway. The cable guard generally comprises an elastomeric pad, a bracket for coupling the pad to the ladder, and a fastener for coupling the bracket to the ladder.

In a further aspect, a method of protecting a cable in a wind turbine generator generally comprises providing a generator including a tower extending from a support surface. The tower comprises a top, a bottom, and a passageway extending from the bottom to the top. A nacelle is rotatably coupled to the tower top for rotational movement with respect to the tower. A rotor is coupled to the nacelle and a plurality of rotor blades is coupled to the rotor. At least one cable extends through the passageway to the nacelle, and a ladder extends through at least a portion of the passageway. A cable guard having an elastomeric pad is installed within the tower to facilitate protecting the at least one cable from abrasion.

Various aspects and embodiments of the present invention will now be described in connection with the accompanying drawings, in which:
Figure 1 is perspective view of a wind turbine generator.
Figure 2 is an enlarged, fragmentary perspective view of the wind turbine generator of Figure 1 with portions broken away to show internal components.

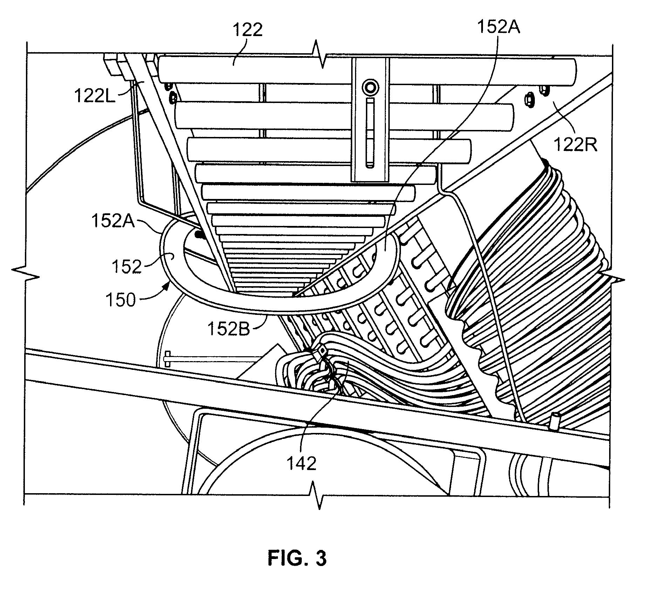

Figure 3 is a perspective view of a first cable guard coupled within the wind turbine generator to facilitate the protection of cables being routed therethrough.

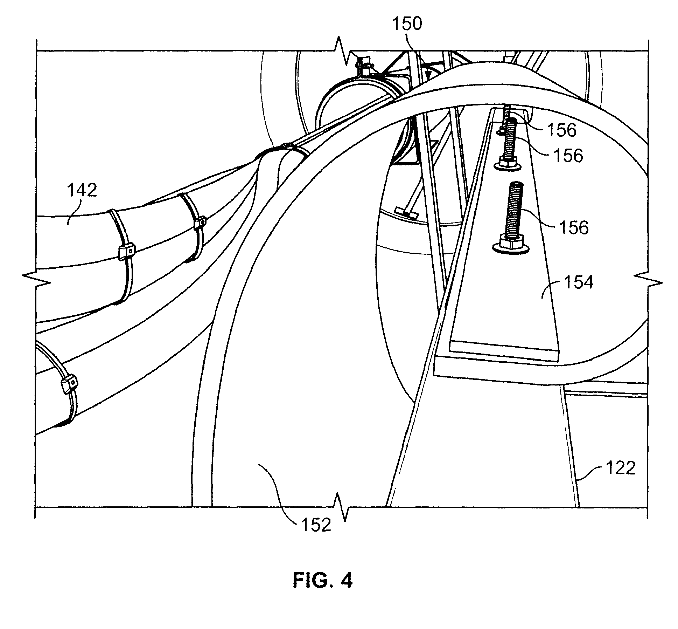

Figure 4 is an enlarged fragmentary perspective view showing the first cable guard being coupled to a ladder within the wind turbine generator.
Figure 5 is a perspective view of a second cable guard for coupling within the wind turbine generator to facilitate the protection of cables being routed therethrough.

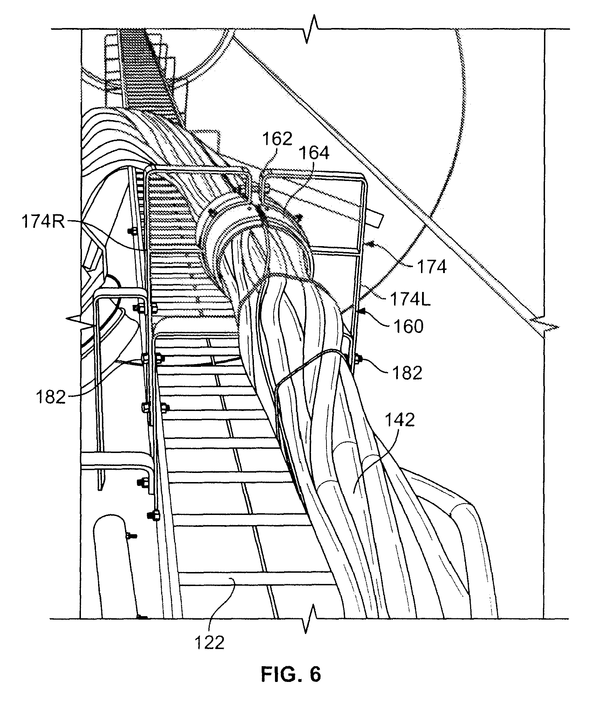

Figure 6 is a perspective view of the second cable guard being coupled to the ladder within the wind turbine generator.

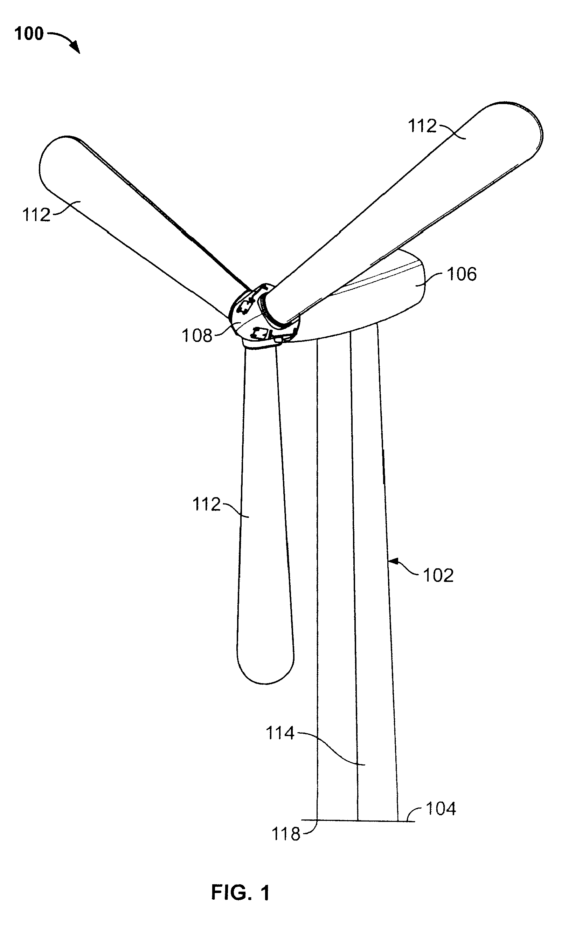

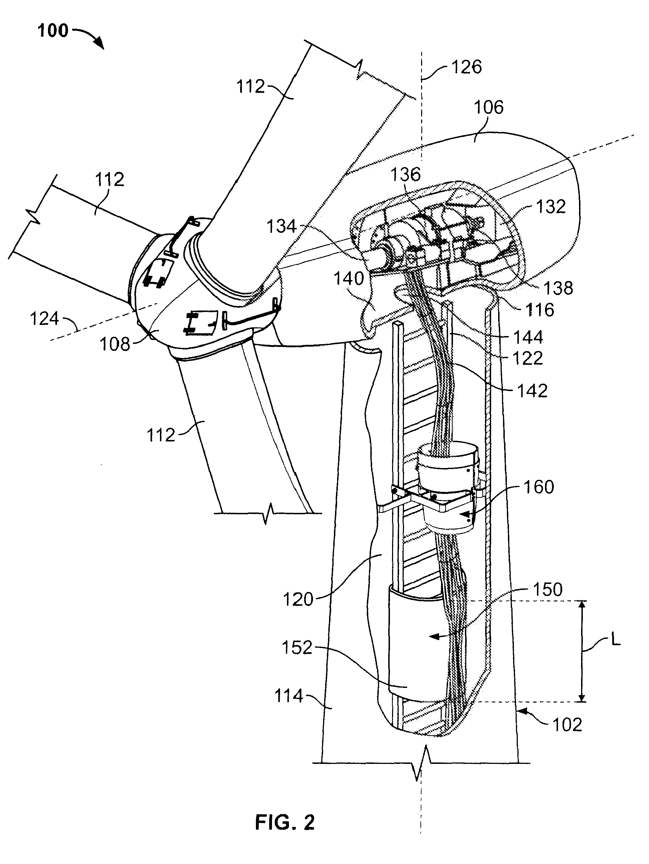

Figures 1 and 2 illustrate an exemplary horizontal axis wind turbine generator 100 having a tower 102 extending from a supporting surface 104, a nacelle 106 mounted on the tower 102, and a rotor 108 coupled to the nacelle 106. The rotor 108 includes a plurality of rotor blades 112 mounted thereto. In the exemplary embodiment, the rotor 108 has three rotor blades 112, but it is understood that the rotor 108 may include more or less than three rotor blades 112. The tower 102, which in the exemplary embodiment is tubular, includes a sidewall 114, a top 116, a bottom 118, and a passageway 120 that extends from the bottom 118 to the top 116. Thus, the passageway 120 in the tower 102 extends between the supporting surface 104 and the nacelle 106. A ladder 122 is coupled to the tower 102 within the passageway 120 to provide access to the nacelle 106. It is contemplated that other types of wind turbine generators (e.g., vertical axis wind turbine generators) can be used without departing from the scope of this invention.

The rotor blades 112 are spaced about the rotor 108 to facilitate rotating the rotor 108 to transfer kinetic energy from the wind into usable mechanical energy, and subsequently, electrical energy. More specifically, as the wind strikes the blades 112, the rotor 108 is rotated about its rotational axis 124. Preferably, the blades 112 are positioned such that they face into the wind. Since the wind direction readily changes, the blades 112, and thereby the nacelle 106, need to be able to rotate with respect to the tower 102 so that the blades can remain substantially facing into the wind. That is, by rotating the nacelle 106, the blades can be rotated such that the wind direction is generally parallel to the rotor rotational axis 124 to maximize the amount of wind striking the blades. As such, the nacelle 106 and blades 112 can rotate with respect to the tower 102 about a rotational axis 126 that is generally transverse to the rotor rotational axis 124 and that is substantially coaxial with a longitudinal axis of the tower 102.

Figure 2 illustrates some of the components housed in the nacelle 106. In the exemplary embodiment, such components include a low speed shaft 134 coupled to the rotor blades 112, a gearbox 136, a high speed shaft 138, and an electric generator 132. Rotation of the rotor blades 112 causes the low speed shaft 134 to rotatably drive the gearbox 136, which in turn, rotates high speed shaft 138. The high speed shaft 138 rotatably drives generator 132, which produces electrical power. Thus, the nacelle 106 houses the generator 132 and associated components of the wind turbine generator 100. The nacelle 106 includes a platform 140 on which the generator 132 and the other components (e.g., the low speed shaft 134, the gearbox 136, the high speed shaft 138) are mounted. It is understood that the generator 132 and associated components can be different than those illustrated herein without departing from the scope of this invention.

A plurality of cables 142 are coupled to the generator 132 and to the other components in the nacelle 106 to transfer the generated electricity from the generator 132 to the power grid, and to supply power and controls to the generator 132 and associated equipment installed in the nacelle 106. An opening 144 is formed in the platform 140 of the nacelle 106 to enable the cables 142 to be routed from the nacelle 106 into the passageway 120 of the tower 102. The passageway 120 in the tower 102 provides an area for cables 142 to be routed from, and into, the nacelle 106 from a location outside of the wind turbine generator 100.

Since the nacelle 106 rotates with respect to the tower 102, the generator 132 and associated equipment contained within the nacelle 106 rotate as well. As a result, the cables 142 coupled to the generator 132 and associated equipment also rotate along a least a portion of their length within the tower passageway 120. A drip loop (not shown) is provided along the length of the cables 142 to create a rotatable connection through which the cables 142 can rotate. As a result, a portion of each cable above the drip loop rotates when the nacelle 106 rotates, while the portion below the drip loop does not rotate. The non-rotating portion of each cable is routed through a conventional cable tray (not shown) disposed within the passageway 120 of the tower 102.

To facilitate preventing damage to the cables 142 caused by the cables 142 contacting the ladder 122 in the passageway 120 of the tower 102 (and/or other components within the tower 102) during rotation of the nacelle 106, a first cable guard 150 is coupled within the tower 102 at, or near, the location at which the cables 142 may be subject to potential contact damage. In the exemplary embodiment, one cable guard 150 includes an elastomeric pad 152 mounted within the tower 102 so that as the cables 142 rotate with the nacelle 106 the cables 142 contact the pad 152 rather than the ladder 122 or other components coupled within the tower 102 that may cause cable damage. In the exemplary embodiment, the pad 152 is unitary and is generally rectangular with lateral edges and longitudinal edges that interconnect the lateral edges. However, it should be understood that the pad 152 can be fabricated from multiple pieces and/or can be fabricated with a non-rectangular shape. In one embodiment, the pad 152 has a durometer of approximately 60. Alternatively, the pad 152 may be fabricated with a durometer other than 60.

In the exemplary embodiment, the pad 152 is mounted to right and left sides 122R, 122L, respectively of the ladder 122. A portion of the pad 152 adjacent each of its longitudinal edges is disposed in a face-to-face engagement with respective sides 122R, 122L of the ladder 122. A flat bar 154 (broadly, also known as a "bracket") fabricated from a metallic material or other suitable material, extends over the pad 152 such that each portion of the pad 152 is "sandwiched" between the ladder 122 and the flat bar 154. Fasteners are used to secure the pad 152 and flat bar 154 to the ladder 122. In the exemplary embodiment, a plurality of fasteners 156, such as nuts and bolts, is used to secure the pad 152 and the two flat bars 154 to the ladder 122 but it is understood that other types of known fasteners may be used.

The first cable guard 150 creates a barrier that substantially prevents the cables 142 from contacting the ladder 122 as well as the fasteners 156 used to secure the pad 152 to the ladder 122. More specifically, in the exemplary embodiment, the pad 152 includes two minor arcuate portions 152A and a major arcuate portion 152B that extends between the minor arcuate portions 152A. The minor arcuate portions 152A of the pad 152 facilitate shielding the rotating cables 142 from contact with the sides 122L, 122R of the ladder 122 and the fasteners 156 used to mount the pad 152 to the ladder 122. The major arcuate portion facilitates shielding the rotating cables 142 from contact with rungs of the ladder 122. Moreover, the arcuate portions 152A, 152B of the pad 152, which are subject to contact by the cables 142, are spaced from the ladder 122 such that when a cable comes into contact with either the major or minor arcuate portions 152A, 152B of the pad 152, the pad 152 has sufficient clearance to deflect inward without contacting any portion of the ladder 122. Moreover, the pad 152 is sufficiently resilient so if contacted by the cables 142, the pad 152 will return to approximately its original (i.e., before contact) position.

In one suitable example, the pad 152 comprises a 3/16 inch (4.8 millimeters) neoprene mat having a width of approximately 36 inches (914.4 millimeters) and a length of approximately 54 inches (1371.6 millimeters). The dimensions and materials listed herein are exemplary only and it is understood that the pad 152 can be fabricated from other materials and with other lengths, widths, thicknesses, and shapes without departing from the scope of this invention.

The first cable guard 150 can be coupled within the tower 102 during its construction or can be retrofitted to a preexisting tower. In either embodiment, a kit can be provided to the installer to facilitate installation of the first cable guard 150. Such a kit may include the pad 152, the flat bars 154, the fasteners 156, and installation instructions.

To facilitate preventing damage to the cables 142 caused by the cables 142 rubbing on the edge of the nacelle opening 144 during rotation of the nacelle 106, a second cable guard 160 can be installed within the tower 102 to capture the cables 142 and thereby limit radial movement of the cables 142. The second cable guard 160 includes an elastomeric pad 162 and a tubular sleeve 164 having a length L1, an inner surface 166, and an outer surface 168. Moreover, in the exemplary embodiment, the pad 162 is coupled to the inner surface 166 of the tubular sleeve 164. The pad 162 within the second cable guard 160 is, in the exemplary embodiment, substantially identical to the pad 152 for use with the first cable guard 150.

The cables 142 are received through the sleeve 164 so that they contact the pad 162. The pad 162 has a length L2 that is longer than the sleeve 164 such that portions of the pad 162 extend above and below the sleeve 164. As a result, upper and lower edges 170, 172 of the sleeve 164 are covered by the portions of the pad 162 extending outward from the sleeve 164. This substantially prevents the cables 142 from contacting the edges 170, 172 of the sleeve 164. In the exemplary embodiment, the sleeve 164 is fabricated from polyvinyl chloride (PVC) conduit and has a diameter D 1 of approximately 12 inches (305 millimeters) and a L1 length of approximately 20 inches (508 millimeters). The length L2 of the exemplary pad 162 is approximately 24 inches (610 millimeters). It should be understood, however, that the sleeve 164 can be fabricated from any other suitable materials and with any dimensions that enable the pad 162 to function as described herein. The pad 162 can also be fabricated with any suitable dimensions.

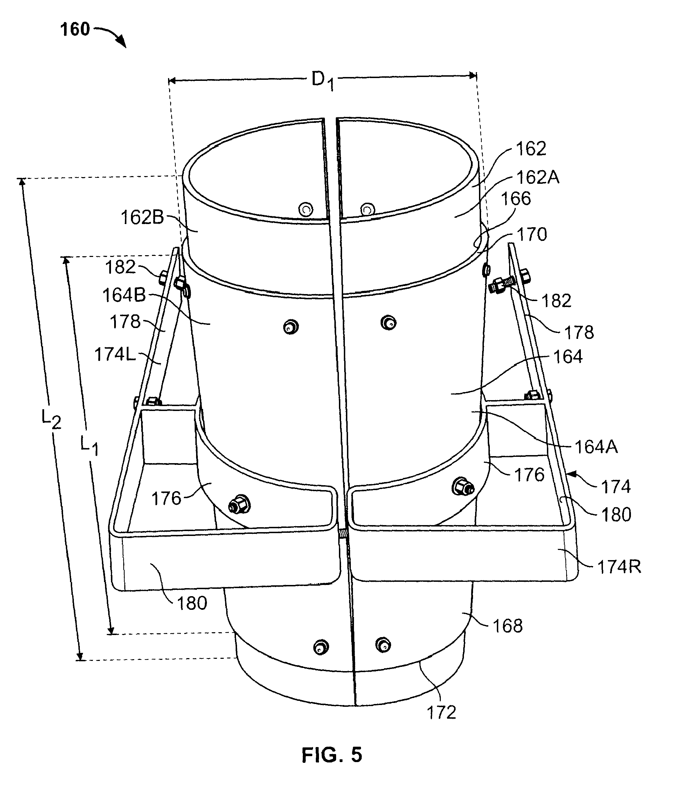

In one embodiment, the sleeve 164 and pad 162 coupled thereto are each divided into two segments 164A, 164B, 162A, 162B such that the segments 164A, 164B, 162A, 162B can be mated together to capture the cables 142 when retrofitting a wind turbine generator with the second cable guard 160. As a result, the segments 164A, 164B, 162A, 162B can be coupled together (e.g., using fasteners 183) with the cables 142 extending through the sleeve 164 (Fig. 5). Alternatively, the sleeve 164 and/or elastomeric pad 162 could be divided into more segments than two. It is also contemplated that the sleeve 164 and elastomeric pad 162 could be formed as a unitary structure (i.e., one segment) for use in newly constructed wind turbine generators.

The second cable guard 160 also comprises a bracket 174 for mounting the sleeve 164 and elastomeric pad 162 to the tower 102. In the exemplary embodiment, the bracket 174 mounts the sleeve 164 with the elastomeric pad 162 to the ladder 122, but it is understood that the bracket 174 can be coupled to other components within the tower 102 or to the tower 102 itself. The bracket 174 includes a right side 174R and a left side 174L that are each coupled (e.g., bolted) to one of the segments 164A, 164B of the sleeve 164. Each side 174R, 174L of each bracket 174 includes an arcuate contacting portion 176 for contacting one of the segments 164A, 164B of the sleeve, a mounting portion 178 for mounting the bracket 174 to the ladder 122, and frame portion 180 extending between the mounting portion 178 and the arcuate contacting portion 176. The mounting portion 178 is adapted to receive fasteners 182, such as, but not limited to nuts and bolts, for securing the respective side 174R, 174L of the bracket 174 to the ladder 122.

The second cable guard 160 can be installed in the tower 102 during its construction or can be retrofitted to a preexisting tower. Either way, a kit can be provided to the installer for installation of the second cable guard 160. The kit includes the sleeve 164, the pad 162, the right and left sides 174R, 174L of the bracket 174, the fasteners 182, and installation instructions.

During use, in the exemplary embodiment, the first and/or second cable guards 150, 160 can be installed in an existing wind turbine generator wherein cable abrasion is observed during inspection of the cables 142. During an inspection process, the cables 142 are examined to detect signs of damage or wear. While the entire rotatable length of the cables 142 is preferably examined, particular attention is paid to the portions of the cables 142 near the opening 144 in the platform 140 and in areas of possible contact with the ladder 122. If wear is observed, the first and/or second cable guards 150, 160 can be coupled to the ladder 122 using the respective brackets (i.e., flat bar154 and bracket 174) and suitable fasteners 156, 182 (e.g., nuts and bolts). Specifically, once the guard (or guards) 150, 160 is coupled in position, the elastomeric pads 152, 162 of the guards protect the cables 142 from further abrasion. It is also understood that the first and/or second cable guards 150, 160 can be installed in an existing wind turbine generator wherein no cable abrasion is observed to facilitate preventing abrasion from occurring. Alternatively, the first and/or second cable guards 150, 160 can be installed in a wind turbine generator while it is being manufactured.

The cable guards 150, 160 as described herein facilitate shielding cables 142. More specifically, the cable guards 150, 160, as described above, facilitate preventing cable damage caused by the cables 142 striking objects during rotation of the nacelle 106.

Exemplary embodiments of cable guards as associated with wind turbine are described above in detail. The methods, apparatus and systems are not limited to the specific embodiments described herein nor to the specific illustrated cable guards.

While the invention has been described in terms of various specific embodiments, those skilled in the art will recognize that the invention can be practiced with modification within the spirit and scope of the claims.

Various aspects and embodiments of the present invention are defined by the following numbered clauses:
1. A wind turbine generator comprising:
   a tower extending from a support surface, said tower comprising a top, a bottom, and a passageway extending from said bottom to said top;
   a nacelle rotatably coupled to said tower top for rotational movement with respect to said tower;
   a rotor coupled to said nacelle, said rotor comprising a plurality of rotor blades coupled thereto;
   at least one cable extending through said passageway and comprising one end coupled with said nacelle; and
   a cable guard coupled within said passageway for shielding said at least one cable from abrasion, said cable guard comprising at least one elastomeric pad.
2. A wind turbine generator in accordance with Clause 1, wherein said tower further comprises a ladder extending through at least a portion of said passageway, said cable guard oriented to facilitate shielding said at least one cable from contact with said ladder.
3. A wind turbine generator in accordance with any preceding clause, wherein said cable guard further comprises a bracket for coupling said cable guard to said ladder.
4. A wind turbine generator in accordance with any preceding Clause, wherein said bracket maintains said cable guard a distance from said ladder.
5. A wind turbine generator in accordance with any preceding Clause, further comprising at least one fastener for securing said bracket to said ladder such that said cable guard is between said at least one fastener and said at least one cable.
6. A wind turbine generator in accordance with any preceding Clause, wherein said cable guard further comprises a sleeve for supporting said at least one elastomeric pad.
7. A wind turbine generator in accordance with any preceding Clause, wherein said sleeve comprises at least two segments coupled together.
8. A wind turbine generator in accordance with any preceding Clause, wherein said sleeve is fabricated polyvinyl chloride.
9. A wind turbine generator in accordance with any preceding Clause, wherein said at least one pad has a durometer of about 60.
10. A cable guard for installation in a wind turbine generator including a tower with a passageway therein and a ladder disposed in the passageway, the cable guard comprising:
   an elastomeric pad;
   a bracket for coupling the pad to the ladder; and
   a fastener for coupling the bracket to the ladder.
11. A cable guard in accordance with Clause 10, wherein the bracket comprises at least two flat bars.
12. A cable guard in accordance with Clause 10 or 11, wherein the cable guard further comprises a sleeve for supporting the elastomeric pad.
13. A cable guard in accordance with any of Clauses 10 to 12, wherein the sleeve includes an interior surface and an exterior surface, the elastomeric pad being coupled to the interior surface of the sleeve.
14. A cable guard in accordance with any of Clauses 10 to 13, wherein the sleeve includes multiple segments.
15. A cable guard in accordance with any of Clauses 10 to 14, wherein the bracket comprises a right side and a left side, each side comprising a contacting portion, a mounting portion, and frame portion extending between the contacting portion and the mounting portion.
16. A method of protecting a cable in a wind turbine generator, the method comprising:
   providing a generator including a tower extending from a support surface, said tower comprising a top, a bottom, and a passageway extending from said bottom to said top, a nacelle rotatably coupled to said tower top for rotational movement with respect to said tower, a rotor coupled to said nacelle and a plurality of rotor blades coupled to the rotor, at least one cable extending through said passageway to the nacelle, and a ladder extending through at least a portion of the passageway; and
   installing a cable guard having an elastomeric pad within the tower to facilitate protecting the at least one cable from abrasion.
17. A method in accordance with Clause 16, wherein installing the cable guard comprises coupling the cable guard to the ladder.
18. A method in accordance with Clause 16 or 17, wherein coupling the cable guard to the ladder comprises coupling a bracket to the ladder.
19. A method in accordance with any of Clauses 16 to 18, wherein the cable guard comprises a tubular sleeve including an inner surface and an outer surface, the elastomeric pad being coupled to the inner surface of the sleeve, and wherein installing a cable guard comprises capturing the at least one cable so that the at least one cable extends through the tubular sleeve adjacent the elastomeric pad.
20. A method in accordance with any of Clauses 16 to 19, wherein installing the cable guard comprises coupling the elastomeric pad directly to the ladder using at least one fastener.

## Claims

1. A wind turbine generator (100) comprising:
a tower (102) extending from a support surface (104), said tower comprising a top (116), a bottom (118), and a passageway (120) extending from said bottom to said top;
a nacelle (106) rotatably coupled to said tower top for rotational movement with respect to said tower;
a rotor (108) coupled to said nacelle, said rotor comprising a plurality of rotor blades (112) coupled thereto;
at least one cable (142) extending through said passageway and comprising one end coupled with said nacelle; and
a cable guard (150) coupled within said passageway for shielding said at least one cable from abrasion, said cable guard comprising at least one elastomeric pad (152,162).

2. A wind turbine generator (100) in accordance with Claim 1, wherein said tower (102) further comprises a ladder (122) extending through at least a portion of said passageway (120), said cable guard (150) oriented to facilitate shielding said at least one cable (142) from contact with said ladder.

3. A wind turbine generator (100) in accordance with any preceding Claim, wherein said cable guard (150) further comprises a bracket (174) for coupling said cable guard to said ladder (122).

4. A wind turbine generator (100) in accordance with any preceding Claim, wherein said bracket (174) maintains said cable guard (150) a distance from said ladder (122).

5. A wind turbine generator (100) in accordance with any preceding Claim, further comprising at least one fastener (156,182,183) for securing said bracket (174) to said ladder (122) such that said cable guard (150) is between said at least one fastener and said at least one cable (142).

6. A wind turbine generator (100) in accordance with any preceding Claim, wherein said cable guard (150) further comprises a sleeve (164) for supporting said at least one elastomeric pad (152,162).

7. A wind turbine generator (100) in accordance with Claim 6, wherein said sleeve (164) comprises at least two segments coupled together.

8. A wind turbine generator (100) in accordance with Claim 6 or 7, wherein said sleeve (164) is fabricated polyvinyl chloride.

9. A wind turbine generator (100) in accordance with any preceding Claim, wherein said at least one pad (152,162) has a durometer of about 60.

10. A cable guard (150) for installation in a wind turbine generator (100) including a tower (102) with a passageway therein and a ladder disposed in the passageway, the cable guard comprising:
an elastomeric pad (152,162);
a bracket (174) for coupling the pad to the ladder (122); and
a fastener (156,182,183) for coupling the bracket to the ladder.
